# EUROPÄISCHE PATENTANMELDUNG

(11) **EP 0 703 472 A1**
(43) Veröffentlichungstag der Anmeldung: **27.03.1996**
(21) Anmeldenummer: 95114035.9
(22) Anmeldetag: 07.09.1995
(51) Int. Cl.: G02B 6/12, G02F 1/313

(54) **Integrierte optische Koppelanordnung mit Umlenkspiegel**

(30) Priorität: 21.09.1994 DE 4433605
(71) Anmelder: Alcatel SEL Aktiengesellschaft, D-70435 Stuttgart (DE); ALCATEL N.V., NL-2288 BH Rijswijk (NL)
(72) Erfinder: Hildebrand, Olaf, Dr., D-70329 Stuttgart (DE); Hoffmann, Walter, Dr., D-71263 Weil der Stadt (DE); Mayer, Hans-Peter, Dr., D-70825 Korntal (DE); Rehm, Werner, Dr., D-70329 Stuttgart (DE); Wünstel, Klaus, Dr., D-71701 Schwieberdingen (DE)
(74) Vertreter: Pechhold, Eberhard, Dipl.-Phys.

(57) **Zusammenfassung**

Bei einer auf einem Substrat (1) in Hybrid-Technologie planar-optisch aufgebauten optischen Koppelanordnung mit optischer Anschlußfaser ist ein als Richtkoppler ausgebildeter optischer Duplexer integriert. Um den Flächenbedarf zu reduzieren und optisches Übersprechen zu verringern, ist der abzweigende Bereich des Richtkopplers (Wellenleiter 6, Zweig 7) scharf abgeknickt. Der Knick ist mit einem der inneren Knickkante (10) gegenüber integrierten Umlenkspiegel (11) ausgebildet.

Außerdem ist das Wellenleiterende des abknickenden Zweiges (7) mit einer Zylinderlinse versehen. Vor dieser sind eine Laserdiode (8) und vor dem abgeschrägten Ende des geradlinig integrierten Wellenleiters (2) eine Fotodiode (5) angeordnet.

## Beschreibung

Die Erfindung betrifft eine optische Koppelanordnung der im Oberbegriff des Anspruchs 1 näher bezeichneten Art. Derartige Koppelanordnungen werden in Systemen der optischen Nachrichtentechnik verwendet.

Aus der DE 42 30 952 A1 ist ein Ausführungsbeispiel eines optischen Duplexers bekannt, bei dem in einem Gehäuse unter anderem ein mit integrierten optischen Funktionseinheiten versehenes Siliziumsubstrat fixiert ist. Das Siliziumsubstrat trägt einen Strahlteiler, der in Form von optischen Leiterbahnen integriert ist und als wellenlängenselektiver Richtkoppler wirkt. Vor einem Ende einer sich geradlinig erstreckenden ersten Leiterbahn sind der Halbleiter einer Laserdiode und am anderen Ende dieser Leiterbahn eine Anschlußfaser angekoppelt. Eine zweite optische Leiterbahn, die mit einem parallel zur ersten Leiterbahn verlaufenden Abschnitt an diese gekoppelt ist, endet mit einem abgebogenen Abschnitt vor dem Halbleiter einer auf dem Siliziumsubstrat fixierten Fotodiode.

Der Erfindung liegt die Aufgabe zugrunde, bei einer optischen Koppelanordnung mit den im Oberbegriff des Anspruchs 1 angegebenen Merkmalen den Flächenbedarf auf dem Substrat zu reduzieren und die Leistungsfähigkeit zu verbessern. Diese Aufgabe wird erfindungsgemäß mit den im Anspruch 1 angegebenen Merkmalen gelöst. Die Unteransprüche enthalten vorteilhafte Ausgestaltungen der optischen Koppelanordnung. Mit der Erfindung erzielbare Vorteile sind der Beschreibung zu entnehmen.

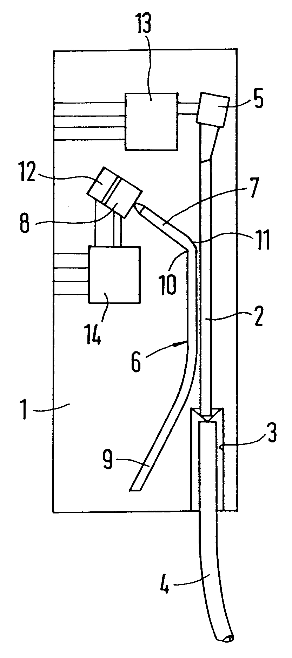

Die Erfindung wird anhand eines in einer Zeichnung in Draufsicht dargestellten Ausführungsbeispiels, das hier einen optischen Transceiver mit einem als Richtkoppler ausgebildeten Duplexer zeigt, wie folgt näher beschrieben:
In der Zeichnung ist ein im Grundriß rechteckiges Substrat mit 1 bezeichnet. Das beispielsweise aus Silizium oder Quarzglas bestehende Substrat 1 trägt in vorgegebenem Abstand zu einer Längskante einen zu dieser parallel verlaufenden, geradlinig integrierten, ersten optischen Wellenleiter 2 aus SiO₂. Vor dessen einem Ende sind eine im Querschnitt V-förmige Nut 3 mit darin fixierter optischer Anschlußfaser 4 und am anderen Ende dieses Wellenleiters 2 der Halbleiter einer Fotodiode 5 angeordnet. Um Rückreflexionen zu vermeiden, ist das zur Fotodiode 5 weisende Wellenleiterende abgeschrägt.

Ein in das Substrat 1 integrierter zweiter optischer Wellenleiter 6 aus SiO₂, der mit einem parallel verlaufenden Abschnitt an den ersten Wellenleiter 2 gekoppelt ist, endet mit einem abknickenden Zweig 7 vor dem Halbleiter einer Laserdiode 8. Das andere, eine Krümmung mit relativ großem Radius aufweisende freie Ende dieses Wellenleiters 6 ist zur Unterdrückung eventueller Reflexionen als Sumpf ausgebildet.

Zur Sicherstellung geringer Einfügeverluste soll die notwendige Aufzweigung der beiden Wellenleiter 2, 6 an sich mit möglichst geringer Krümmung erfolgen. Jedoch wird dafür auf dem Substrat relativ viel Platz benötigt. Um die Substratfläche besser ausnutzen und den Platzbedarf reduzieren zu können, ist vorgesehen, daß der zur Laserdiode 8 gerichtete Zweig 7 des zweiten optischen Wellenleiters 6 von dem parallel zum ersten optischen Wellenleiter verlaufenden koppelnden Bereich scharf abgeknickt und daß der scharf konturierte Knick mit einem der inneren Knickkante 10 gegenüber integrierten Umlenkspiegel 11 ausgebildet ist. Der direkt am Ende der Koppelstrecke oder kurz nach dem Knick, d.h. an einer Stelle, an der die Wellenleiter 2, 7 optisch bereits voneinander getrennt sind, in Trockenätztechnik herstellbare Umlenkspiegel 11 gestattet es, den zur Laserdiode 8 führenden Zweig 7 des zweiten optischen Wellenleiters 6 in einem Winkel von beispielsweise 45° zum ersten optischen Wellenleiter 2 anzuordnen. Um den Einkoppelwirkungsgrad der Laserdiode 8 zu verbessern, ist das Wellenleiterende dieses Zweiges 7 mit einer Zylinderlinse versehen, die in derselben Ätztechnik herstellbar ist wie der Umlenkspiegel 11.

Der vom koppelnden Wellenleiterbereich scharf abknickende Zweig 7 gestattet auf der Substratfläche zwischen der Laserdiode 8, die ggf. mit einer integrierten Monitordiode 12 gekoppelt ist, und der Fotodiode 5, eine Verstärkerschaltung 13 unterzubringen. Unterhalb der Laserdiode 8 kann dann, im Bereich neben dem koppelnden Bereich des zweiten Wellenleiters 6 die Treiberelektronik 14 für Laser- und Monitordiode 8, 12 angeordnet sein.

Der planar-optisch aufgebaute Transceiver mit dem in der Zeichnung als Richtkoppler dargestellten optischen Duplexer kann in Abhängigkeit der Bedarfsstückzahlen in Hybrid-Technologie und bei Verwendung eines anderen geeigneten Substratmaterials auch in monolithisch integrierter Ausführung kostengünstig gefertigt und dabei gegen Umgebungseinflüsse geschützt, in Kunststoff eingebettet werden. Außerdem ist durch die räumlich sehr weit voneinander entfernte Anordnung von Fotodiode 5 und Laserdiode 8 elektrisches Übersprechen stark reduziert.

Um Anteile des von der Laserdiode 8 gesendeten Signals auszufiltern, die an Störungsstellen im ersten optischen Wellenleiter 2 und der in Senderichtung folgenden Anschlußfaser 4 in die Empfangsrichtung reflektiert werden und den Empfang in der Fotodiode stören, kann zwischen dem Knick des zweiten optischen Wellenleiters und dem mit der Fotodiode gekoppelten Ende des ersten optischen Wellenleiters ein weiterer (in der Figur nicht dargestellter) optischer Wellenleiter an den ersten optischen Wellenleiter angekoppelt sein. Dieser ist wie der zweite optische Wellenleiter auf dem Substrat integriert und führt nach einer parallel zum ersten optischen Wellenleiter, in Richtung Fotodiode verlaufenden Koppelstrecke von dieser abbiegend oder abknickend in einen Sumpf.

Werden die Koppelbereiche, die der erste optische Wellenleiter mit den beiden anderen optischen Wellenleitern bildet, so bemessen, daß die Mittenfrequenzen der Sperrbereiche der dadurch entstehenden Richtkoppler geringfügig gegeneinander verschoben sind, kann eine größere Breite der Sperrbereiche und damit eine bessere Entkopplung von Sende- und Empfangszweig erreicht werden.

## Patentansprüche

1. Optische Koppelanordnung, bei der auf einem Substrat (1) ein erster optischer Wellenleiter (2) und parallel dazu ein abzweigender zweiter optischer Wellenleiter (6) integriert sind,
**dadurch gekennzeichnet,** daß der abzweigende Bereich des zweiten Wellenleiters (6) abgeknickt, mit einem der Knickkante (10) gegenüber integrierten Umlenkspiegel (11) ausgebildet ist.

2. Optische Koppelanordnung nach Anspruch 1, dadurch gekennzeichnet, daß sie auf dem Substrat (1) als Transceiver mit einem Duplexer ausgebildet ist.

3. Optische Koppelanordnung nach Anspruch 1 oder Anspruch 2, dadurch gekennzeichnet, daß die Enden des ersten optischen Wellenleiters (2) an eine Fotodiode (5) und an eine in einer Nut (3) des Substrates (1) fixierte optische Anschlußfaser (4) und ein Ende des zweiten optischen Wellenleiters (6) an eine Laserdiode (8) gekoppelt sind.

4. Optische Koppelanordnung nach Anspruch 3, dadurch gekennzeichnet, daß das Ende des abgeknickten Zweiges (7) mit einer Zylinderlinse versehen und vor der Zylinderlinse die Laserdiode (8) angeordnet ist.

5. Optische Koppelanordnung nach Anspruch 4, dadurch gekennzeichnet, daß ein freies Ende (9) des zweiten optischen Wellenleiters (6) zur Unterdrückung von Reflexionen als Sumpf ausgebildet ist.

6. Optische Koppelanordnung nach einem der Ansprüche 3 bis 5, dadurch gekennzeichnet, daß an dem Ende des ersten optischen Wellenleiters (2), an dem die Fotodiode (5) angeordnet ist, das Wellenleiterende zur Vermeidung von Rückreflexionen abgeschrägt ist.

7. Optische Koppelanordnung nach einem der Ansprüche 3 bis 6, dadurch gekennzeichnet, daß an dem ersten optischen Wellenleiter (2) ein weiterer optischer Wellenleiter angekoppelt ist, der mit einem freien Ende in einen Sumpf führt und aus der Laserdiode (8) stammende, in Richtung auf die Fotodiode (5) reflektierte Signalanteile aus dem ersten optischen Wellenleiter auskoppelt und unterdrückt.

8. Optische Koppelanordnung nach Anspruch 7, dadurch gekennzeichnet, daß die von dem ersten optischen Wellenleiter (2) mit dem zweiten optischen Wellenleiter (6) und mit dem weiteren optischen Wellenleiter gebildeten, Richtkoppler darstellenden Koppelbereiche derart dimensioniert sind, daß die Mittenfrequenzen ihrer Sperrbereiche geringfügig gegeneinander verschoben sind.
